# EUROPEAN PATENT SPECIFICATION

(11) **EP 2 374 660 B1**
(45) Date of publication and mention of the grant of the patent: **31.10.2018**
(21) Application number: 11161116.6
(22) Date of filing: 05.04.2011
(51) Int. Cl.: B60Q 1/08, B60Q 1/14

(54) **CONTROL DEVICE, VEHICULAR LAMP SYSTEM, AND VEHICULAR LAMP**
STEUERVORRICHTUNG, FAHRZEUGLAMPENSYSTEM UND FAHRZEUGLAMPE
DISPOSITIF DE CONTRÔLE, SYSTÈME DE LAMPE DE VÉHICULE ET LAMPE DE VÉHICULE

(30) Priority: 12.04.2010 JP 2010091487
(43) Date of publication of application: 12.10.2011
(73) Proprietor: Koito Manufacturing Co., Ltd., Tokyo 108-8711 (JP)
(72) Inventor: Kobayashi, Shoji, Shizuoka (JP)
(74) Representative: Hoffmann Eitle

(56) References cited:
- EP-A2- 0 949 118
- EP-A2- 0 976 973
- EP-A2- 1 669 665
- EP-A2- 2 138 350
- DE-A1-102005 047 331
- GB-A- 2 337 578
- JP-B2- 2 921 404
- US-A1- 2003 001 509
- US-A1- 2005 152 581
- US-A1- 2010 052 550

## Description

### [Technical Field]

The present invention relates to a control device that controls a vehicular lamp, a vehicular lamp system, and a vehicular lamp.

### [Related Art]

A technique for appropriately varying the light distribution pattern of a vehicular lamp in accordance with the running state of a vehicle is proposed in the related art (see Patent Document 1, for example).

### [Patent Document 1]

Japanese Patent Application Laid-Open (Kokai) No. 2007-1304052

### [Disclosure of the Invention]

### [Problem to be Solved by the Invention]

It is desired that the brightness of a field of view ahead of a driver should be uniform temporally and spatially from the viewpoint of securing the visibility of an object to be viewed such as an oncoming vehicle and a pedestrian. While running on an actual road, however, the brightness of the field of view ahead is not necessarily uniform temporally and spatially because of the presence of road illumination and store illumination. For example, the environmental brightness in a well-lit downtown area is about 5 to 10 cd/m². However, even in an urban area, the environmental brightness in an area which is a distance away from the central area is as low as about 0.5 to 1 cd/m². If the host vehicle stops behind a vehicle at an intersection, the back surface of the vehicle shines brightly at about 50 to 300 cd/m², depending on the body color of vehicle, upon light from a headlight of the host vehicle. The brightness of the field of view ahead of the driver is also varied in accordance with such variations in environmental brightness and whether a vehicle is present or absent ahead of the host vehicle. Variations in brightness of the field of view ahead bring about variations in adaptation brightness of the eyes of the driver, which affects the visual performance. For example, an increase in adaptation brightness of the eyes of the driver makes it difficult to recognize an object to be viewed with a low brightness.

US 2005/01 52 581 A1 discloses a vehicle lamp control system in which an image of a portion of the surface in front a vehicle is taken and a determination unit determines whether the the road reflection exceeds a threhold. If there is high reflection from the road control is executed to reduce the quantity of light or a radiation range is narrowed.

US 2010/0052550 A1 discloses another vehicle lamp control system in which the lamp illumance is controlled if a visual object illumance ahead of the vehicle is less than a threshold.

EP 2 138 350 A2 and EP 1 669 665 A2 disclose vehicle lamp control systems in which lights are on/off controlled if certain illuminance values ahead of the vehicle exceed or fall below certain threshold values.

In EP 0 949 118 A2 a sensor arrangment captures th light in front of a vehicle and the detected illuminance is compared with a number of pre-stored illumination situations which are typically existing in front of the vehicle at drey or wet road surface or different surface types. Based on the comparison, the pitch of the vehicle lamp is adjusted such that it has a predetermined target illuminance.

JP 2 921 404 B2 describes when a reference lamp is turned on, a control device reads reflective ability to correct luminous energy decreased when lamp color is yellow, and in the case that the reflective ability is a prescribed value or more, the lamp color is set to yellow. In the case that the reflective ability is less than the prescribed value further with a fog switch off and a wiper wiping speed at a low speed, since the road surface has low reflectance, the lamp color is set to white.

The present invention has been made in view of such circumstances, and it is therefore an object of the present invention to provide a technique capable of suppressing variations in visual performance of a driver.

### [Means for Solving the Problem]

In order to address the foregoing issue, an aspect of the present invention provides a control device including: a road surface brightness detection section that receives data obtained by capturing a scene ahead of a vehicle to detect a brightness of a road surface on the basis of the data; and a radiation light amount control section that outputs a control signal for adjusting a radiation light amount of a vehicular lamp such that the brightness of the road surface falls within a predetermined target brightness range.

The control device according to the aspect is used to control a vehicular lamp with an adjustable radiation light amount. In the case where the vehicular lamp is controlled using the control device, the brightness of the road surface is maintained in the predetermined target brightness range. This reduces variations in adaptation brightness of the eyes of the driver, which suppresses variations in visual performance and contributes to safe driving.

The control device further includes the technical features of claim 1 and in particular: a road surface state detection section that detects a state of the road surface on the basis of the data; and a brightness range setting section that sets the target brightness range in accordance with the state of the road surface.

Thus the road surface brightness can be maintained at an appropriate value in accordance with the road surface state.

The road surface state detection section may include a dry/wet determination section that determines whether the road surface is dry or wet, and the brightness range setting section may set the target brightness range in accordance with whether the road surface is dry or wet. Also, the road surface state detection section may include a new/old determination section that determines whether the road surface is new or old, and the brightness range setting section may set the target brightness range in accordance with whether the road surface is new or old.

Another aspect of the present invention provides a vehicular lamp system. The vehicular lamp system includes: an imaging device that captures a scene ahead of a vehicle; a vehicular lamp with an adjustable radiation light amount; and a control device that controls the radiation light amount of the vehicular lamp and that includes the technical features of claim 1. In particular, the control device includes: a road surface brightness detection section that receives data obtained by capturing the scene ahead of the vehicle from the imaging device to detect a brightness of a road surface on the basis of the data; and a radiation light amount control section that outputs to the vehicular lamp a control signal for adjusting the radiation light amount such that the brightness of the road surface falls within a predetermined target brightness range.

According to the aspect, the brightness of the road surface is maintained in the predetermined target brightness range. This reduces variations in adaptation brightness of the eyes of the driver, which suppresses variations in visual performance and contributes to safe driving.

Still another aspect provides a vehicular lamp. A radiation light amount of the vehicular lamp is adjusted such that a brightness of a road surface detected on the basis of data obtained by capturing a scene ahead of a vehicle falls within a predetermined target brightness range.

According to the aspect, the brightness of the road surface is maintained in the predetermined target brightness range. This reduces variations in adaptation brightness of the eyes of the driver, which suppresses variations in visual performance and contributes to safe driving.

### [Effects of the Invention]

According to the present invention, it is possible to suppress variations in visual performance of a driver.

### [Brief Description of the Drawings]

[FIG. 1]

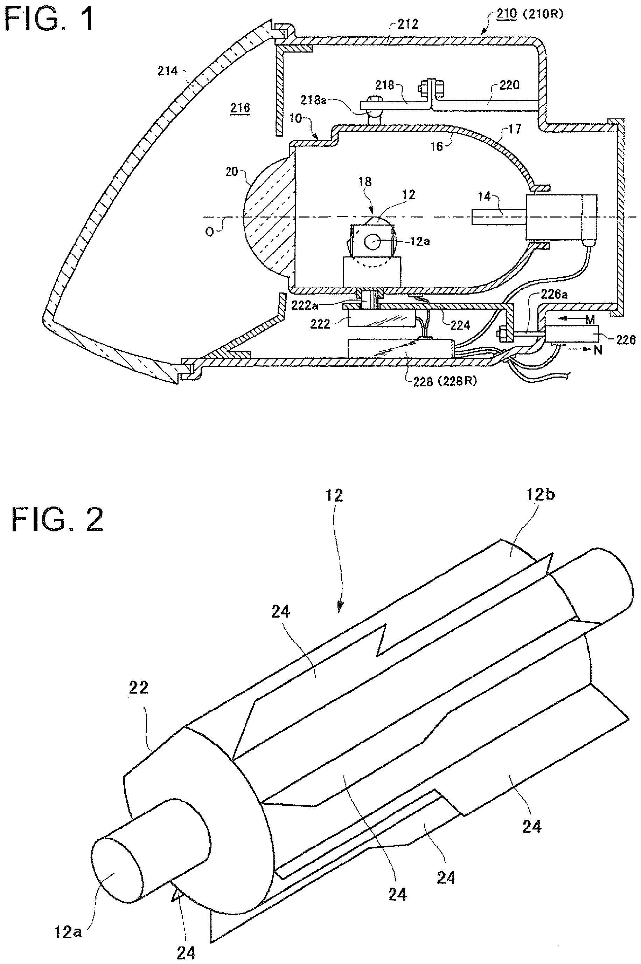

   FIG. 1 is a schematic cross-sectional view showing the internal structure of a vehicular lamp used in a vehicular lamp system according to an embodiment of the present invention.
[FIG. 2]
   FIG. 2 is a schematic perspective view of a rotational shade.
[FIG. 3]

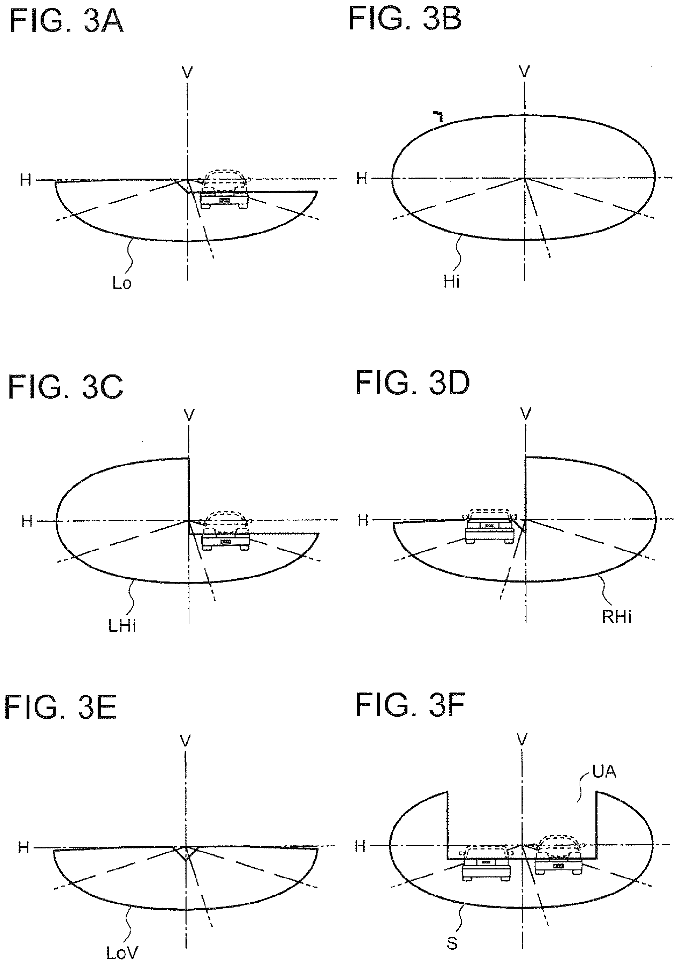

   FIGS.3A to 3F each show a light distribution pattern that can be formed by the vehicular lamp according to the embodiment.
[FIG. 4]

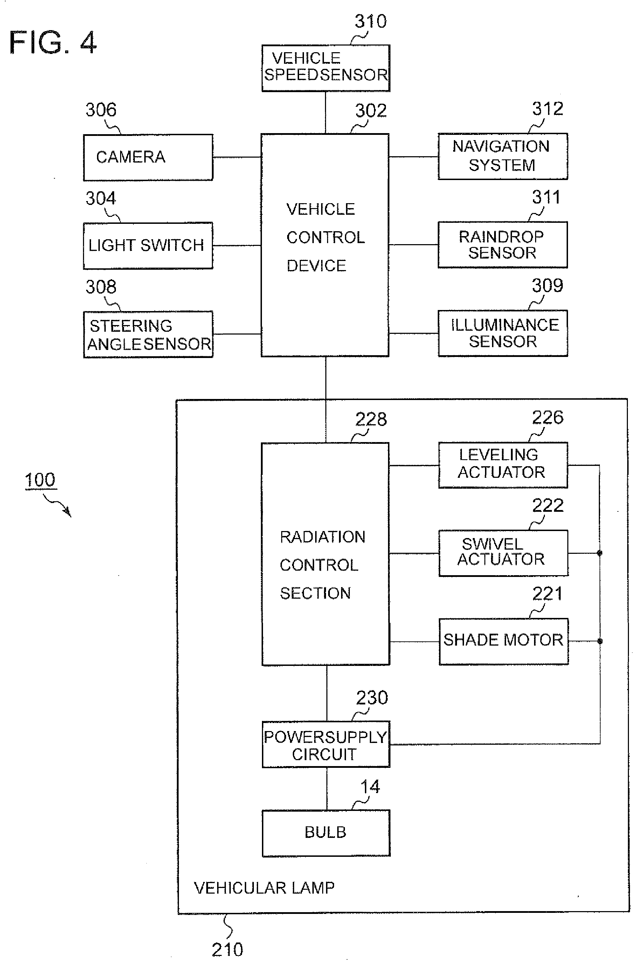

   FIG. 4 is a functional block diagram illustrating the vehicular lamp system according to the embodiment of the present invention.
[FIG. 5]

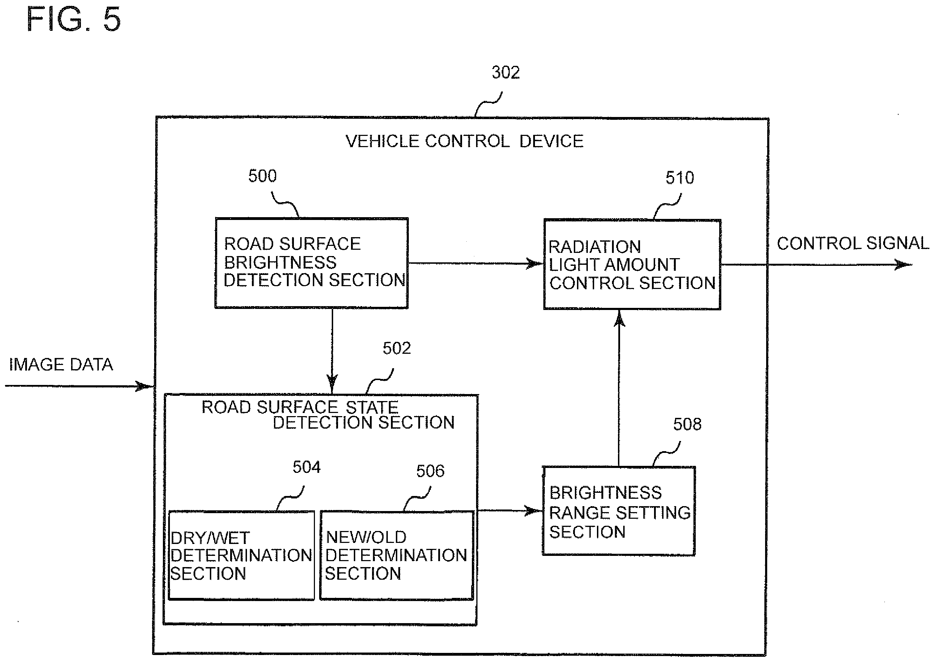

   FIG. 5 is a functional block diagram showing the configuration of a vehicle control device.
[FIG. 6]

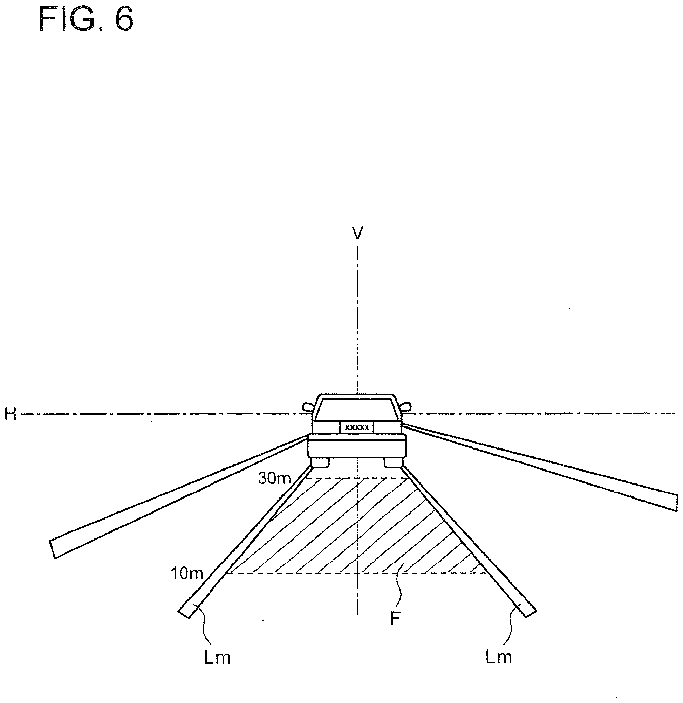

   FIG. 6 illustrates an area for which a road surface brightness is calculated.
[FIG. 7]

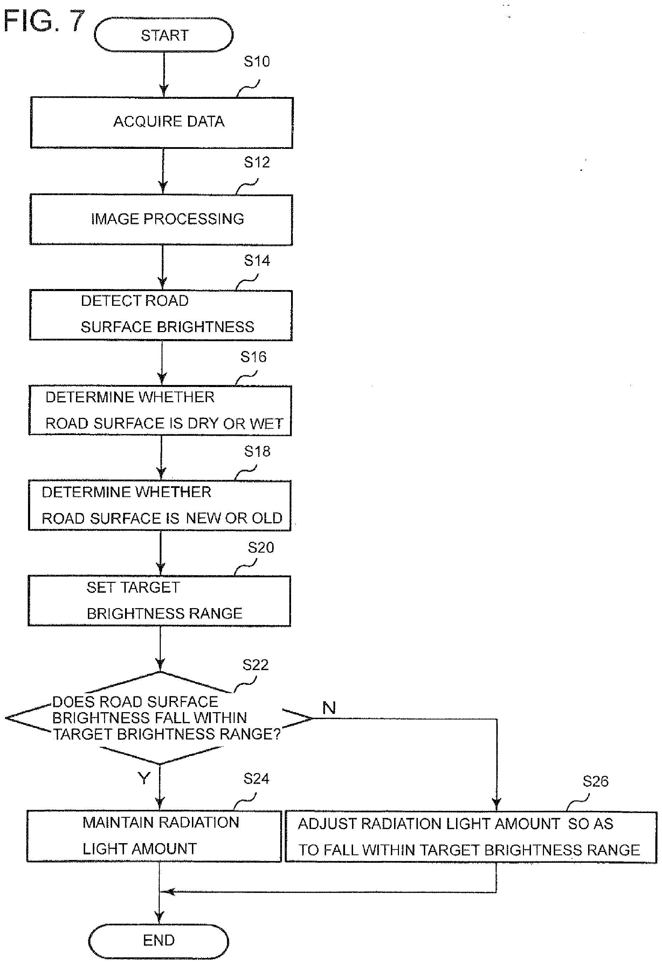

   FIG. 7 is a flowchart of road surface brightness maintenance control.

### [Modes for Carrying Out the Invention]

A preferred embodiment of the present invention will be described below with reference to the drawings.

FIG. 1 is a schematic cross-sectional view showing the internal structure of a vehicular lamp 210 used in a vehicular lamp system according to an embodiment of the present invention. The vehicular lamp 210 shown in FIG. 1 is a headlamp with variable light distribution provided one each on the left and right sides of a vehicle in the vehicular width direction. Because the left and right vehicular lamps 210 have substantially equivalent structures, the structure of a vehicular lamp 210R disposed on the right side of the vehicle will be described as a representative example.

The vehicular lamp 210R has a lamp chamber 216 formed by a lamp body 212 having an opening that opens forwardly of the vehicle and a transparent cover 214 that covers the opening of the lamp body 212. A lamp unit 10 that radiates light forwardly of the vehicle is housed in the lamp chamber 216. A lamp bracket 218 having a pivot mechanism 218a about which the lamp unit 10 is swung is formed at a part of the lamp unit 10. The lamp bracket 218 is connected to a body bracket 220 provided to extend from an inner wall surface of the lamp body 212 by a fastening member such as a screw. Thus, the lamp unit 10 is fixed at a predetermined position in the lamp chamber 216, and can be changed in posture about the pivot mechanism 218a to a forwardly inclined posture or a rearwardly inclined posture, for example.

A rotary shaft 222a of a swivel actuator 222 that forms a variable light distribution headlamp for curved roads (Adaptive Front-lighting System: AFS) that iraradiates the traveling direction when the vehicle is running on a curved road or the like is fixed to the lower surface of the lamp unit 10, The swivel actuator 222 is fixed to a unit bracket 224.

The swivel actuator 222 turns (swivels) the lamp unit 10 about the pivot mechanism 218a to the traveling direction on the basis of data on the steering amount provided from the vehicle, data on the shape of the road on which the vehicle is running provided from a navigation system, the relationship between the relative positions of a vehicle ahead and the host vehicle, and so forth. As a result, the radiation range of the lamp unit 10 is directed not to a location right in front of the vehicle but to a location ahead along a curve of a curved road, which improves the field of view ahead of the driver. The swivel actuator 222 may be formed by a stepping motor, for example. In the case where the swivel angle is fixed, a solenoid may also be utilized.

A leveling actuator 226 disposed outside the lamp body 212 is also connected to the unit bracket 224. The leveling actuator 226 is formed by a motor that expands and contracts a rod 226a in the direction of arrows M, N and so forth, for example. In the case where the rod 226a is expanded in the direction of the arrow M, the lamp unit 10 is swung about the pivot mechanism 218a to take the rearwardly inclined posture. In the case where the rod 226a is contracted in the direction of the arrow N, in contrast, the lamp unit 10 is swung about the pivot mechanism 218a to take the forwardly inclined posture. When the lamp unit 10 takes the rearwardly inclined posture, leveling adjustment is performed to direct the optical axis upward. When the lamp unit 10 takes the forwardly inclined posture, leveling adjustment is performed to direct the optical axis downward. By performing leveling adjustment in this way, the optical axis can be adjusted in accordance with the posture of the vehicle. As a result, forward radiation performed by the vehicular lamp 210 can be adjusted to reach an optimum distance.

Such leveling adjustment may also be executed in accordance with the posture of the vehicle while the vehicle is running. For example, in the case where the vehicle is accelerated while running, the rearwardly inclined posture is taken. In the case where the vehicle is decelerated, the forwardly inclined posture is taken. Thus, radiation of the vehicular lamp 210 is directed upward and downward in correspondence with the posture of the vehicle, which increases and reduces the distance of forward radiation. Therefore, the leveling actuator 226 may execute leveling adjustment on the lamp unit 10 in real time on the basis of the posture of the vehicle estimated from data on the vehicle speed provided from the vehicle. As a result, forward radiation can be adjusted to reach an optimum distance even while the vehicle is running. Such control may be referred to as "auto leveling".

A radiation control section 228 that executes control for turning on and off the lamp unit 10 and control for forming a light distribution pattern is disposed on an inner wall surface of the lamp chamber 216, for example at a position below the lamp unit 10. In the case of FIG. 1, a radiation control section 228R that controls the vehicular lamp 210R is disposed. The radiation control section 228R also controls the swivel actuator 222, the leveling actuator 226, and so forth.

The lamp unit 10 may include an aming adjustment mechanism. For example, an aming pivot mechanism about which the lamp unit 10 is swung during aming adjustment may be disposed at the point of connection between the rod 226a of the leveling actuator 226 and the unit bracket 224. In addition, a pair of aming adjustment screws that advance and retract in the vehicular longitudinal direction may be disposed with a gap therebetween in the vehicular width direction at the point of connection between the body bracket 220 and the lamp bracket 218. For example, when the two aming adjustment screws are advanced forward, the lamp unit 10 is swung about the aming pivot mechanism to take the forwardly inclined posture so that the optical axis is adjusted downward. Likewise, when the two aming adjustment screws are retracted rearward, the lamp unit 10 is swung about the aming pivot mechanism to take the rearwardly inclined posture so that the optical axis is adjusted upward. Meanwhile, when the aming adjustment screw on the left side in the vehicular width direction is advanced forward, the lamp unit 10 is turned about the aming pivot mechanism to take a rightwardly turned posture so that the optical axis is adjusted rightward. Meanwhile, when the aming adjustment screw on the right side in the vehicular width direction is advanced forward, the lamp unit 10 is turned about the aming pivot mechanism to take a leftwardly turned posture so that the optical axis is adjusted leftward. Such aming adjustment may be performed when the vehicle is shipped or inspected, or when the vehicular lamp 210 is replaced. Then, the vehicular lamp 210 is adjusted to a prescribed posture determined in design so that control for forming a light distribution pattern according to the embodiment is performed with reference to the determined posture.

The lamp unit 10 includes a shade mechanism 18 including a rotational shade 12, a bulb 14 serving as a light source, a lamp housing 17 that supports a reflector 16 on its inner wall, and a projection lens 20. As the bulb 14, an incandescent lamp, a halogen lamp, a discharge lamp, an LED, or the like, for example, may be used. In the embodiment, the bulb 14 is formed by a halogen lamp. The reflector 16 reflects light radiated from the bulb 14. Then, part of light from the bulb 14 and light reflected by the reflector 16 is guided to the projection lens 20 through the rotational shade 12 forming the shade mechanism 18.

FIG. 2 is a schematic perspective view of the rotational shade 12. The rotational shade 12 is a cylindrical member that is rotatable about a rotary shaft 12a. The rotational shade 12 has a cut-away portion 22 formed by cutting away a part of the rotational shade 12 extending in the axial direction. A plurality of plate-like shade plates 24 are held on an outer peripheral surface 12b of the rotational shade 12 excluding the cut-away portion 22. The rotational shade 12 can move the cut-away portion 22 or one of the plurality of shade plates 24 to the position of a rear-side focal plane, which includes the rear-side focal point of the projection lens 20, in accordance with the rotational angle of the rotational shade 12. Then, a light distribution pattern that conforms to the shape of the ridge line of the shade plate 24 positioned on an optical axis O is formed in correspondence with the rotational angle of the rotational shade 12. For example, by moving one of the plurality of shade plates 24 to a location on the optical axis O to shield part of light radiated from the bulb 14, a low-beam light distribution pattern or a light distribution pattern including some of the characteristics of a low-beam light distribution pattern is formed. Meanwhile, by moving the cut-away portion 22 to the location on the optical axis O not to shield light radiated from the bulb 14, a high-beam light distribution pattern is formed.

The rotational shade 12 can be rotated by a shade motor (not shown). By controlling the amount of rotation of the shade motor, the shade plate 24 or the cut-away portion 22 for forming the desired light distribution pattern can be moved to the location on the optical axis O. No cut-away portion 22 may be provided on the outer peripheral surface 12b of the rotational shade 12 so that the rotational shade 12 has only a light shielding function. In the case where the high-beam light distribution pattern is to be formed, a solenoid or the like, for example, may be driven to retract the rotational shade 12 from the location on the optical axis O. With such a configuration, the rotational shade 12 is fixed at the low-beam light distribution pattern or a light distribution pattern similar to the low-beam light distribution pattern even if a failure occurs in the shade motor which rotates the rotational shade 12, for example. That is, it is possible to provide a fail-safe function by reliably preventing the rotational shade 12 from being fixed at a posture at which the high-beam light distribution pattern is formed.

The projection lens 20 is disposed on the optical axis O extending in the vehicular longitudinal direction. The bulb 14 is disposed rearwardly of the rear-side focal plane of the projection lens 20. The projection lens 20 is a planoconvex aspherical lens with a convex front-side surface and a flat rear-side surface, and projects a light source image formed on the rear-side focal plane of the projection lens 20 onto a virtual vertical screen ahead of the vehicular lamp 210 as an inverted image.

FIGS.3A to 3F each show a light distribution pattern that can be formed by the vehicular lamp 210 according to the embodiment. FIGS.3A to 3F each show a light distribution pattern to be formed on a virtual vertical screen disposed at a distance of 25 m ahead of the vehicular lamp 210. The light distribution patterns shown in FIGS.3A to 3F are each a synthesized light distribution pattern formed by superposing light distribution patterns respectively formed by the vehicular lamps 210 disposed on the left and right sides in the vehicular width direction.

FIG.3A shows a low-beam light distribution pattern Lo. The low-beam light distribution pattern Lo is a light distribution pattern formed with consideration not to give glare to a vehicle ahead or a pedestrian when passing in the left lane. The low-beam light distribution pattern Lo includes, at its upper end, an oncoming lane-side cut-offline provided on the right side of a vertical line V to extend in parallel with a horizontal line H, a host vehicle lane-side cut-off line provided on the left side of the vertical line V to extend in parallel with the horizontal line H at a position higher than the oncoming lane-side cut-off line, and an oblique cut-off line provided between the oncoming lane-side cut-off line and the host vehicle lane-side cut-off line to connect both the cut-off lines. The oblique cut-offline extends obliquely leftward and upward from the intersection of the oncoming lane-side cut-off line and a V-V line at an inclination angle of 45°.

FIG.3B shows a high-beam light distribution pattern Hi. The high-beam light distribution pattern Hi is a light distribution pattern formed to illuminate a wide range ahead and an area far ahead, and is formed in the case where it is not necessary to consider glare for a vehicle ahead or a pedestrian, for example.

FIG.3C shows a left-high-beam light distribution pattern LHi for use in an area where the traffic regulations allow left-hand traffic. The left-high-beam light distribution pattern LHi is a special high-beam light distribution pattern for use when passing in the left lane in which the high-beam light distribution pattern Hi is shielded on the oncoming lane side and high-beam radiation is performed only on the host vehicle lane side. The left-high-beam light distribution pattern LHi is formed by synthesizing a left-high-beam light distribution pattern formed by the left vehicular lamp 210 and a low-beam light distribution pattern formed by the right vehicular lamp 210. The left-high-beam light distribution pattern LHi is suitable in the case where there is no vehicle ahead or pedestrian on the host vehicle lane side and there is an oncoming vehicle or a pedestrian on the oncoming lane side, and is formed with consideration not to give glare to an oncoming vehicle or a pedestrian in the oncoming lane while improving the field of view ahead of the driver.

FIG.3D shows a right-high-beam light distribution pattern RHi for use in an area where the traffic regulations allow left-hand traffic. The right-high-beam light distribution pattern RHi is a special high-beam light distribution pattern for use when passing in the left lane in which the high-beam light distribution pattern Hi is shielded on the host vehicle lane side and high-beam radiation is performed only on the oncoming lane side. The right-high-beam light distribution pattern RHi is formed by synthesizing a right-high-beam light distribution pattern formed by the right vehicular lamp 210 and a low-beam light distribution pattern formed by the left vehicular lamp 210. The right-high-beam light distribution pattern RHi is suitable in the case where there is a vehicle ahead or a pedestrian on the host vehicle lane side and there is no oncoming vehicle or pedestrian on the oncoming lane side, and is formed with consideration not to give glare to a vehicle ahead or a pedestrian in the host vehicle lane while improving the field of view ahead of the driver.

FIG.3E shows a V-beam light distribution pattern LoV in which radiation of light to the vicinity of the intersection of the vertical line V and the horizontal line H on the virtual vertical screen is suppressed. In order to form the V-beam light distribution pattern LoV, for example, the left vehicular lamp 210 forms a low-beam light distribution pattern shown in FIG.3A. Meanwhile, the right vehicular lamp 210 forms a low-beam light distribution pattern for use in an area where the traffic regulations allow right-hand traffic, that is, a light distribution pattern that is symmetric to the light distribution pattern shown in FIG.3A with respect to the vertical line V. By superposing the two different light distribution patterns, it is possible to form the V-beam light distribution pattern LoV in which radiation of light to the vicinity of the intersection of the vertical line V and the horizontal line H, where there may be a preceding vehicle or an oncoming vehicle far ahead, is suppressed. The V-beam light distribution pattern LoV is a light distribution pattern that allows the driver to easily recognize an obstacle on a road shoulder on the host vehicle lane side or on the oncoming lane side while suppressing glare given to a vehicle far ahead.

FIG.3F shows a split light distribution pattern S. The split light distribution pattern S is a special high-beam light distribution pattern having a shielded area UA at the center and above the horizontal line H and a high-beam area on both sides of the shielded area UA in the horizontal direction. The split light distribution pattern S can be formed by superposing a left-high-beam light distribution pattern formed by the left vehicular lamp 210 and a right-high-beam light distribution pattern formed by the right vehicular lamp 210. In forming the split light distribution pattern S, the left-high-beam light distribution pattern and the right-high-beam light distribution pattern are superposed such that respective high-beam areas of both the light distribution patterns do not contact each other so that the shielded area UA is formed.

The range of the shielded area UA in the horizontal direction can be varied by swiveling the left and right vehicular lamps 210 to move at least one of the left-high-beam light distribution pattern and the right-high-beam light distribution pattern in the horizontal direction.

FIG. 4 is a functional block diagram illustrating a vehicular lamp system 100 according to the embodiment of the present invention. The vehicular lamp system 100 includes the vehicular lamp 210 discussed above, a vehicle control device 302 that controls the vehicular lamp 210, a light switch 304, a camera 306, a steering angle sensor 308, an illuminance sensor 309, a vehicle speed sensor 310, a raindrop sensor 311, and a navigation system 312.

The radiation control section 228 of the vehicular lamp 210 controls a power supply circuit 230 in accordance with an instruction from the vehicle control device 302 mounted on the vehicle to execute lighting control of the bulb 14. The radiation control section 228 also controls the leveling actuator 226, the swivel actuator 222, and a shade motor 221 in accordance with an instruction from the vehicle control device 302.

For example, the radiation control section 228 controls the swivel actuator 222 when making a turn, such as while running through a curve or making a right or left turn, to direct the optical axis of the lamp unit 10 into the direction in which the vehicle is traveling. The radiation control section 228 also controls the leveling actuator 226 in accordance with forward and rearward inclinations of the posture of the vehicle during acceleration and deceleration to adjust the optical axis of the lamp unit 10 in the vehicular vertical direction such that forward radiation is adjusted to reach an optimum distance. The radiation control section 228 further controls the leveling actuator 226, the swivel actuator 222, and the shade motor 221 in accordance with an instruction about a light distribution pattern from the vehicle control device 302.

The vehicular lamp system 100 enables the driver to manually switch between the light distribution patterns by operating the light switch 304. Hereinafter, a mode in which the light distribution pattern is controlled manually is occasionally referred to as a "manual mode". For example, in the case where the driver selects the low-beam light distribution pattern, the vehicle control device 302 issues an instruction for the radiation control section 228 to form the low-beam light distribution pattern. When the instruction is received, the radiation control section 228 controls the leveling actuator 226, the swivel actuator 222, and the shade motor 221 so as to form the low-beam light distribution pattern.

The vehicular lamp system 100 can detect the circumstances around the vehicle using various sensors to form a light distribution pattern optimum for the circumstances around the vehicle irrespective of an operation of the light switch 304. Hereinafter, a mode in which the light distribution pattern is controlled in this way is occasionally referred to as an "ADB (Adaptive Driving Beam) mode".

For example, in the case where a vehicle running ahead of the host vehicle is detected, the vehicle control device 302 determines that glare should not be given to the vehicle running ahead to issue an instruction for the radiation control section 228 to form the low-beam light distribution pattern, for example. Meanwhile, in the case where no vehicle running ahead is detected, the vehicle control device 302 determines that the field of view of the driver should be improved to issue an instruction for the radiation control section 228 to form the high-beam light distribution pattern, for example.

In order to detect a vehicle running ahead, the camera 306 such as a stereo camera, for example, is connected to the vehicle control device 302. Image data captured by the camera 306 are transmitted to the vehicle control device 302, which performs signal processing for image analysis to detect a vehicle running ahead in the captured range. Then, the vehicle control device 302 selects an optimum light distribution pattern on the basis of acquired information on the vehicle running ahead, and issues an instruction for the radiation control section 228 to form the selected light distribution pattern. Means for detecting a vehicle running ahead may be modified appropriately, and other detection means such as a millimeter-wave radar or an infrared radar, for example, may be used in place of the camera 306. Such detection means may be used in combination with each other.

The vehicle control device 302 can also acquire information from the steering angle sensor 308, the vehicle speed sensor 310, and so forth, which are normally mounted on the vehicle, to select which light distribution pattern to form in accordance with the running state and the running posture of the vehicle, and to conveniently change the light distribution pattern by varying the direction of the optical axis. For example, in the case where it is determined on the basis of information from the steering angle sensor 308 that the vehicle is making a turn, the vehicle control device 302 controls rotation of the rotational shade 12 so as to form a light distribution pattern for improving the field of view in the turning direction. The optical axis of the lamp unit 10 may be directed into the turning direction to improve the field of view by controlling the swivel actuator 222 without varying the rotational state of the rotational shade 12.

Besides, the vehicle control device 302 can also acquire road shape information, road structure information, traffic sign information, and so forth from the navigation system 312. By acquiring such information beforehand, it is also possible to control the leveling actuator 226, the swivel actuator 222, the shade motor 221, and so forth in order to smoothly form a light distribution pattern suitable for the road on which the vehicle is running.

The vehicular lamp system 100 according to the embodiment further has a road surface brightness maintenance function for maintaining the brightness of the road surface ahead of the vehicle within a predetermined brightness range. Maintaining the brightness of the road surface within the predetermined range reduces variations in adaptation brightness of the eyes of the driver, which suppresses variations in visual performance. A configuration for implementing the road surface brightness maintenance function will be described below.

FIG. 5 is a functional block diagram showing the configuration of the vehicle control device 302. While the vehicle control device 302 also has a function of executing the ADB mode discussed above and so forth, only functional blocks related to the road surface brightness maintenance function are shown in FIG. 5. The functional blocks shown in FIG. 5 may be implemented by hardware such as elements and mechanical devices including a CPU and a memory of a computer, or may be implemented by software such as a computer program. However, the functional blocks are implemented here by cooperation of hardware and software. Thus, it is to be understood by those skilled in the art that the functional blocks are implemented in various combinations of hardware and software.

As shown in FIG. 5, the vehicle control device 302 includes a road surface brightness detection section 500, a road surface state detection section 502, a brightness range setting section 508, and a radiation light amount control section 510.

The road surface brightness detection section 500 receives image data on a scene ahead of the vehicle captured by the camera 306 to detect the road surface brightness on the basis of the image data. FIG. 6 illustrates an area for which a road surface brightness is calculated. In the embodiment, the road surface brightness is calculated by calculating the average brightness of an area F defined within the host vehicle lane between partition lines Lm and between a line at a distance of 10 m and a line at a distance of 30 m ahead of the vehicle. By calculating the average brightness of such an area F, the road surface brightness can be detected precisely. The range of the area F may be varied in accordance with the characteristics of the camera 306. In many cases, the partition lines Lm are brighter than the road surface brightness. Thus, in calculating the average road surface brightness, it is preferable to calculate the average brightness without using such bright partition lines from the viewpoint of the detection precision.

The operation of the road surface brightness detection section 500 is described more specifically. The road surface brightness detection section 500 performs edge processing on the image data from the camera 306 to detect the partition lines Lm, the road shape, the road structure, and so forth. The area F is determined on the basis of the partition lines Lm, the road shape, and so forth detected, and the average brightness of the area F is calculated. The road surface brightness detection section 500 also calculates the brightness of the partition lines Lm, and calculates the average brightness of the road surface without using the partition lines Lm in the case where the brightness of the partition lines Lm is a predetermined value or more.

The road surface state detection section 502 detects the state of the road surface on the basis of the image data. In the embodiment, the state of the road surface includes whether the road surface is dry or wet and whether the road surface is new or old. In order to detect such states, the road surface state detection section 502 includes a dry/wet determination section 504 that determines whether the road surface is dry or wet and a new/old determination section 512 that determines whether the road surface is new or old.

The dry/wet determination section 504 determines whether the road surface is dry or wet on the basis of the road surface brightness and a brightness contrast C between the partition lines Lm and the area F. Specifically, it is determined whether the road surface is dry, wet, or flooded on the basis of the following determination criteria.

Dry road surface: road surface brightness = 0.5 to 2 cd/m² and brightness contrast C = 2 to 5

Wet road surface: road surface brightness < 0.5 cd/m² and brightness contrast C > 5

Flooded road surface: road surface brightness < 0.5 cd/m² and brightness contrast C ≈ 0

The new/old determination section 506 determines whether the road surface is new or old on the basis of the road surface brightness and the brightness contrast C between the partition lines Lm and the area F. Specifically, it is determined whether the road surface has been newly built or has been used over years on the basis of the following determination criteria.

New road surface: road surface brightness < 0.5 cd/m² and brightness contrast C > 10

Old road surface: road surface brightness > 1.5 cd/m² and brightness contrast C = 1 to 3

The dry/wet determination section 504 and the new/old determination section 506 may determine whether the road surface is dry or wet and whether the road surface is new or old on the basis of information from the raindrop sensor 311 and the illuminance sensor 309 connected to the vehicle control device 302 in addition to the determination criteria described above. In this case, the determination precision can be enhanced. In the case where the raindrop sensor 311 is not mounted on the vehicle, a determination may be made additionally on the basis of the actuation state of wipers or the like.

The brightness range setting section 508 sets a target brightness range, which is the range of the road surface brightness to be targeted, in accordance with the state of the road surface detected by the road surface state detection section 502. For example, the brightness range setting section 508 has a plurality of target brightness ranges such as a dry road surface target brightness range suitable for running on a dry road surface, a wet road surface target brightness range suitable for running on a wet road surface, a flooded road surface target brightness range suitable for running on a flooded road surface, a new road surface target brightness range suitable for running on a newly built road surface, and an old road surface target brightness range suitable for running on a road surface that has been used over years.

The retroreflectance of a road surface is varied in accordance with the road surface state such as whether the road surface is dry or wet, whether the road surface is new or old, and so forth. Specifically, the retroreflectance of a road surface is lowered in the case where the road surface is wet or new. That is, if a road surface is wet or new, less light is retroreflected from the road surface toward the host vehicle, and more light is reflected forwardly of the vehicle. Thus, when the road surface is wet or new, if brightness control is performed using target brightness ranges suitable for running on dry and old road surfaces, the radiation light amount may be so large as to give glare to an oncoming vehicle or the like. More specifically, even when the radiation light amount is increased, the detected road surface brightness is not increased, which makes the radiation light amount larger and larger, and makes the amount of light reflected forwardly of the vehicle accordingly larger. Therefore, in the embodiment, the brightness range setting section 508 changes the target brightness range in accordance with whether the road surface is dry or wet and whether the road surface is new or old. For example, the respective upper limits of the wet road surface target brightness range and the new road surface target brightness range are set to be lower than that of the dry road surface target brightness range. This prevents the radiation light amount from becoming too large, which prevents giving glare to an oncoming vehicle.

Each of the target brightness ranges discussed above may be defined by an upper limit and a lower limit, or may be defined by setting one of an upper limit and a lower limit. Each of the target brightness ranges may be obtained by appropriately defining a brightness range that is suitable for running through experiments, simulations, or the like.

The radiation light amount control section 510 outputs a control signal for adjusting the radiation light amount of the vehicular lamp 210 such that the road surface brightness falls within the target brightness range set by the brightness range setting section 508. The control signal is fed to the radiation control section 228, which controls the amount of electricity applied to the bulb 14 via the power supply circuit 230 so as to adjust the road surface brightness within the target brightness range. A plurality of light sources may be provided in the vehicle, and the radiation light amount control section 510 may adjust the brightness of the road surface ahead of the vehicle by increasing and reducing the number of light sources, of the plurality of light sources, that are turned on. The brightness of the road surface ahead of the vehicle may also be adjusted by actuating the leveling actuator 226 to tilt the optical axis O in the vertical direction.

FIG. 7 is a flowchart of road surface brightness maintenance control. The control flow is performed at predetermined time intervals.

First, the vehicle control device 302 acquires image data on a scene ahead of the vehicle from the camera 306 (S10). In S10, raindrop information maybe acquired from the raindrop sensor 311, and illuminance information may be acquired from the illuminance sensor 309.

Next, the road surface brightness detection section 500 performs image processing or analysis on the received image data to detect the partition lines Lm on the road surface, the road shape, the road structure, and so forth (S12). Then, the area F for which the road surface brightness is to be detected as shown in FIG. 6 is determined on the basis of the partition lines Lm, the road shape, and so forth. Then, the road surface brightness detection section 500 detects the road surface brightness for the area F on the basis of the image data (S14).

Next, the dry/wet determination section 504 determines whether the road surface is dry or wet on the basis of the road surface brightness and the brightness contrast C between the partition lines Lm and the area F (S16). Subsequently, the new/old determination section 506 determines whether the road surface is new or old on the basis of the road surface brightness and the brightness contrast C between the partition lines Lm and the area F (S18).

After it is determined whether the road surface is dry or wet and whether the road surface is new or old, the brightness range setting section 508 sets the target brightness range (S20). The target brightness range may be set by selecting one of the dry road surface target brightness range, the wet road surface target brightness range, the flooded road surface target brightness range, the new road surface target brightness range, and the old road surface target brightness range discussed above, for example.

Next, the radiation light amount control section 510 determines whether or not the road surface brightness detected by the road surface brightness detection section 500 falls within the target brightness range set by the brightness range setting section 508 (S22). In the case where the road surface brightness falls within the target brightness range (Y in S22), the radiation light amount control section 510 outputs a control signal for instructing maintenance of the current radiation light amount to the radiation control section 228 of the vehicular lamp 210 (S24). In the case where the road surface brightness does not fall within the target brightness range (N in S22), the radiation light amount control section 510 performs adjustment to increase and reduce the radiation light amount such that the road surface brightness falls within the target brightness range, and outputs a control signal for instructing output of the adjusted radiation light amount to the radiation control section 228 (S26). This causes the brightness of the road surface ahead of the vehicle to fall within a certain range. Thus, it is possible to reduce variations in adaptation brightness of the eyes of the driver, which suppresses variations in visual performance of the driver and contributes to safe driving.

In the flowchart discussed above, the road surface brightness maintenance control implemented by the functional blocks shown in FIG. 5 is described. Light distribution pattern control in the ADB mode is performed concurrently with or before or after the road surface brightness maintenance control so that a control signal is fed from the vehicle control device 302 to the radiation control section 228. The control signal may be a signal for instructing the swivel angle or a signal for instructing the amount of rotation of the shade motor, for example. The control flow of the light distribution pattern control may be incorporated in the control flow of the road surface brightness maintenance control shown in FIG. 7.

As has been described above, according to the vehicular lamp system 100 of the embodiment, the radiation light amount of the vehicular lamp 210 is adjusted such that the road surface brightness falls within the predetermined target brightness range, which reduces variations in adaptation brightness of the eyes of the driver. Thus, it is possible to suppress variations in visual performance, and to contribute to safe driving.

In addition, by setting the target brightness range in accordance with the state of the road surface, it is possible to maintain an appropriate road surface brightness matching the state of the road surface. For example, by setting the target brightness range in accordance with whether the road surface is dry or wet and whether the road surface is new or old, it is possible to enable control so as not to give glare to a preceding vehicle or an oncoming vehicle.

The present invention has been described above by way of an embodiment. It is to be understood by those skilled in the art that the embodiment is illustrative and may be modified in various ways in combination of the constituent elements and the processes without departing from the scope of the present invention, as defined by the appended claims.

### [Description of the Reference Numerals]

- 100: VEHICULAR LAMP SYSTEM
- 210: VEHICULAR LAMP
- 228: RADIATION CONTROL SECTION
- 230: POWER SUPPLY CIRCUIT
- 302: VEHICLE CONTROL DEVICE
- 306: CAMERA
- 309: ILLUMINANCE SENSOR
- 311: RAINDROP SENSOR
- 500: ROAD SURFACE BRIGHTNESS DETECTION SECTION
- 502: ROAD SURFACE STATE DETECTION SECTION
- 504: DRY/WET DETERMINATION SECTION
- 506: NEW/OLD DETERMINATION SECTION
- 508: BRIGHTNESS RANGE SETTING SECTION
- 510: RADIATION LIGHT AMOUNT CONTROL SECTION

## Claims

1. A control device (100) comprising:
a road surface brightness detection section (502) that is configured to receive data obtained by capturing an area (F) ahead of a vehicle (V) to detect a brightness of a road surface for the area (F) on the basis of the data, wherein at least one partition line (Lm) on the road surface is detected and the area (F) is determined at least on the basis of the partition line (Lm), and is further configured to calculate the brigthness of the road surface for the area (F) and the brightness of the partition lines (Lm);
a road surface state detection section (502) that is configured to detect a state of the road surface on the basis of evaluating the data with respect to road surface brightness and brightness contrast between the partition lines (Lm) and the area (F) ;
a brightness range setting section (508) that is configured to set a target brightness range in accordance with the state of the road surface; and
a radiation light amount control section (510) that is configured to output a control signal for adjusting a radiation light amount of a vehicular lamp (210) such that the brightness of the road surface falls within the predetermined target brightness range, including a road surface brightness maintenance function for maintaining the brightness of the road surface within said predetermined range to reduce variations in adpatation brightness of the eyes of the driver.

2. The control device (100) according to claim 1, **characterized in that**
the road surface state detection section (502) includes a dry/wet determination section (504) that determines whether the road surface is dry or wet, and
the brightness range setting section (508) is configured to set the target brightness range in accordance with whether the road surface is dry or wet.

3. The control device according to claim 1 or 2, **characterized in that**
the road surface state detection section (502) includes a new/old determination section (506) that is configured to determine whether the road surface is new or old, and
the brightness range setting section (502) is configured to set the target brightness range in accordance with whether the road surface is new or old.

4. A vehicular lamp system **characterized by** comprising:
an imaging device (306) that is configured to capture a scene ahead of a vehicle (V);
a vehicular lamp (210) with an adjustable radiation light amount; and
a control device (100) according to one or more of claims 1-3.

## Patentansprüche

1. Steuervorrichtung (100), umfassend:
einen Abschnitt zum Nachweis der Helligkeit der Straßenoberfläche (502), der konfiguriert ist, um Daten zu empfangen, die durch die Erfassung eines Bereichs (F) vor einem Fahrzeug (V) erhalten werden, um eine Helligkeit einer Straßenoberfläche für den Bereich (F) auf der Grundlage der Daten nachzuweisen, wobei mindestens eine Trennlinie (Lm) auf der Straßenoberfläche nachgewiesen wird und der Bereich (F) mindestens auf der Grundlage der Trennlinie (Lm) bestimmt wird, und weiter konfiguriert ist, um die Helligkeit der Straßenoberfläche für den Bereich (F) und die Helligkeit der Trennlinien (Lm) zu berechnen;
einen Abschnitt zum Nachweis des Zustands der Straßenoberfläche (502), der konfiguriert ist, um einen Zustand der Straßenoberfläche auf der Grundlage der Bewertung der Daten mit Bezug auf die Helligkeit der Straßenoberfläche und den Helligkeitskontrast zwischen den Trennlinien (Lm) und dem Bereich (F) nachzuweisen;
einen Abschnitt zur Einstellung des Helligkeitsbereichs (508), der konfiguriert ist, um einen Ziel-Helligkeitsbereich in Übereinstimmung mit dem Zustand der Straßenoberfläche einzustellen; und
einen Abschnitt zur Steuerung der Menge von Strahlungslicht (510), der konfiguriert ist, um ein Steuersignal auszugeben, um eine Menge von Strahlungslicht einer Fahrzeuglampe (210) anzupassen, sodass die Helligkeit der Straßenoberfläche in den vorbestimmten Ziel-Helligkeitsbereich fällt, aufweisend eine Funktion zur Beibehaltung der Helligkeit der Straßenoberfläche, um die Helligkeit der Straßenoberfläche innerhalb des vorbestimmten Bereichs beizubehalten, um Variationen bei der Anpassung der Helligkeit der Augen des Fahrers zu reduzieren.

2. Steuervorrichtung (101) nach Anspruch 1, **dadurch gekennzeichnet, dass**
der Abschnitt zum Nachweis des Zustands der Straßenoberfläche (502) einen Abschnitt zum Bestimmen von trocken/nass (504) aufweist, der bestimmt, ob die Straßenoberfläche trocken oder nass ist, und
der Abschnitt zur Einstellung des Helligkeitsbereichs (508) konfiguriert ist, um den Ziel-Helligkeitsbereich in Übereinstimmung damit einzustellen, ob die Straßenoberfläche trocken oder nass ist.

3. Steuervorrichtung nach Anspruch 1 oder 2, **dadurch gekennzeichnet, dass**
der Abschnitt zum Nachweis des Zustands der Straßenoberfläche (502) einen Abschnitt zum Bestimmen von neu/alt (506) aufweist, der konfiguriert ist, um zu bestimmen, ob die Straßenoberfläche neu oder alt ist, und
der Abschnitt zur Einstellung des Helligkeitsbereichs (502) konfiguriert ist, um den Ziel-Helligkeitsbereich in Übereinstimmung damit einzustellen, ob die Straßenoberfläche neu oder als ist.

4. Fahrzeuglampensystem, **dadurch gekennzeichnet, dass** es umfasst:
eine Bildgebungsvorrichtung (306), die konfiguriert ist, um eine Szene vor einem Fahrzeug (V) zu erfassen;
eine Fahrzeuglampe (210) mit einer einstellbaren Menge von Strahlungslicht; und
eine Steuervorrichtung (100) nach einem oder mehreren der Ansprüche 1 - 3.

## Revendications

1. Dispositif de commande (100) comprenant :
une section de détection de luminosité de surface de route (502) qui est configurée pour recevoir des données obtenues en capturant une zone (F) devant un véhicule (V) pour détecter une luminosité d'une surface de route pour la zone (F) sur la base des données, dans lequel au moins une ligne de séparation (Lm) sur la surface de route est détectée et la zone (F) est déterminée au moins sur la base de la ligne de séparation (Lm), et est en outre configurée pour calculer la luminosité de la surface de route pour la zone (F) et la luminosité des lignes de séparation (Lm) ;
une section de détection d'état de surface de route (502) qui est configurée pour détecter un état de la surface de route sur la base de l'évaluation des données par rapport à la luminosité de surface de route et au contraste de luminosité entre les lignes de séparation (Lm) et la zone (F) ;
une section de définition de plage de luminosité (508) qui est configurée pour définir une plage de luminosité cible en fonction de l'état de la surface de route ; et
une section de commande de quantité de lumière de rayonnement (510) qui est configurée pour produire en sortie un signal de commande pour régler une quantité de lumière de rayonnement d'une lampe de véhicule (210) de telle sorte la luminosité de la surface de route se trouve dans la plage de luminosité cible prédéterminée, incluant une fonction de maintien de luminosité de surface de route pour maintenir la luminosité de la surface de route dans ladite plage prédéterminée pour réduire des variations d'adaptation à la luminosité des yeux du conducteur.

2. Dispositif de commande (100) selon la revendication 1, **caractérisé en ce que**
la section de détection d'état de surface de route (502) inclut une section de détermination d'état sec/humide (504) qui détermine si la surface de route est sèche ou humide, et
la section de définition de plage de luminosité (508) est configurée pour définir la plage de luminosité cible selon que la surface de route est sèche ou humide.

3. Dispositif de commande selon la revendication 1 ou 2, **caractérisé en ce que**
la section de détection d'état de surface de route (502) inclut une section de détermination de nouvelle/ancienne (506) qui est configurée pour déterminer si la surface de route est nouvelle ou ancienne, et
la section de définition de plage de luminosité (502) est configurée pour définir la plage de luminosité cible selon que la surface de route est nouvelle ou ancienne.

4. Système de lampe de véhicule **caractérisé en ce qu'**il comprend :
un dispositif d'imagerie (306) qui est configuré pour capturer une scène devant un véhicule (V) ;
une lampe de véhicule (210) avec une quantité de lumière de rayonnement réglable ; et
un dispositif de commande (100) selon une ou plusieurs des revendications 1 à 3.
